# EUROPÄISCHE PATENTSCHRIFT

(11) **EP 4 486 477 B1**
(45) Veröffentlichungstag und Bekanntmachung des Hinweises auf die Patenterteilung: **08.10.2025**
(21) Anmeldenummer: 22710543.4
(22) Anmeldetag: 01.03.2022
(51) Int. Cl.: C11D 3/00, C11D 3/20, C11D 3/37, C11D 17/00, B01D 19/04

(54) **ENTSCHÄUMERFORMULIERUNGEN ENTHALTEND TRIACYLGLYCERIDE**
DEFOAMER FORMULATIONS CONTAINING TRIACYLGLYCERIDES
FORMULATIONS ANTIMOUSSE CONTENANT DES TRIACYLGLYCÉRIDES

(43) Veröffentlichungstag der Anmeldung: 08.01.2025
(73) Patentinhaber: Wacker Chemie AG, 81671 München (DE)
(72) Erfinder: BREHM, Christof, 84489 Burghausen (DE); DENKOV, Nikolai Denkov, 1407 Sofia (BG); GEORGIEV, Vasil Stefanov, 2800 Sandanski (BG); MEIER, Andreas, 84508 Burgkirchen (DE); TCHOLAKOVA, Slavka Stoyanova, 1407 Sofia (BG); WOLFRUM, Stefan, 84453 Mühldorf (DE); ZIRZLMEIER, Johannes, 84489 Burghausen (DE)
(74) Vertreter: Belz, Ferdinand
(86) Internationale Anmeldenummer: PCT/EP2022/055066
(87) Internationale Veröffentlichungsnummer: WO 2023/165674

(56) Entgegenhaltungen:
- EP-A2- 0 723 795
- CH-B5- 673 190
- CN-A- 102 993 815
- DE-A1- 102010 048 948
- US-A1- 2007 276 056
- US-A1- 2021 315 204
- US-B2- 9 018 265

## Beschreibung

Die Erfindung betrifft Entschäumerformulierungen enthaltend Triacylglyceride und deren Verwendung als Entschäumer, insbesondere in wässrigen Tensidsystemen.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaums kann auf mechanischem Wege oder durch den Zusatz von Entschäumern erfolgen. Die erfolgreichsten Entschäumerformulierungen, insbesondere für Waschmittel, basieren auf Silikonen.

Es besteht eine gewisse Nachfrage nach Entschäumerformulierungen, die eine verringerte Menge an Organopolysiloxan enthalten oder frei von Organopolysiloxanen sind. In US 5 693 256 A sowie in EP 1 703 958 B1 sind Organopolysiloxanfreie Entschäumerformulierungen beschrieben, in denen statt der Organopolysiloxane eine wasserunlösliche organische Flüssigkeit zusammen mit hydrophoben Füllstoffen und einem Siloxanharz eingesetzt wird. Bei der in diesen Patenten eingesetzten wasserunlöslichen organischen Flüssigkeit kann es sich neben Isoparaffinöl, Fettsäureester oder Mineralöl auch um ein pflanzliches Öl handeln. Als pflanzliche Öle sind Rapsöl und Erdnussöl beschrieben. Bei Pflanzenölen handelt es sich um Triacylglyceride, in denen drei Fettsäurereste gemeinsam über Esterbindungen an einen Glycerinrest gebunden sind. Bei Rapsöl handelt es sich um ein Triacylglycerid, dessen Fettsäurereste überwiegend Ölsäure-, Linolsäure-, Linolensäure- sowie Palmitinsäurereste sind, somit C16- oder C18-Fettsäurereste sind. Das gleiche gilt für Erdnussöl, das überwiegend aus Ölsäure-, Linolsäure- sowie Palmitinsäureresten besteht, somit ebenfalls aus C16- oder C18-Fettsäureresten.

In US 5 693 256 A sowie in EP 1 703 958 B1 werden die beschriebenen Entschäumerformulierungen, neben der Schwarzlaugenentschäumung oder der Schaumzerstörung bei Schneidölprozessen, vor allem zur Schaumkontrolle während des Waschzyklus in der Waschmaschine zum Wäschewaschen eingesetzt.

Dokument US2007/276056 offenbart eine Entschäumerformulierung mit einer Mischung von Glyceroldi- oder -triester mit mindestens 14 C-Atomen.

In den beschriebenen Anwendungen zeigen die Entschäumerformulierungen auf Basis von Rapsöl bzw. Erdnussöl eine recht gute Wirkung.

Im Laufe des Verbesserungsprozesses derartiger Entschäumerformulierungen zeigte es sich aber, dass bei Anwendungen, in denen kationische Tenside verwendet werden, oder in Anwendungen, in denen Spreitung eine bedeutende Rolle spielt, beispielsweise im Spülzyklus des Waschprozesses, die Schaumregulierungsmittel auf Basis von Triacylglyceriden mit überwiegend C16- oder C18-Fettsäureresten, wie das beschriebene Rapsöl bzw. Erdnussöl, eine sehr schwache bzw. keine Wirkung zeigen.

Es bestand die Aufgabe Entschäumerformulierungen bereitzustellen, die die oben genannten Nachteile nicht aufweisen.

Die Aufgabe wird durch die Erfindung gelöst.

Gegenstand der Erfindung sind somit Entschäumerformulierungen

### (A) enthaltend

(1) Triacylglyceride der Formel 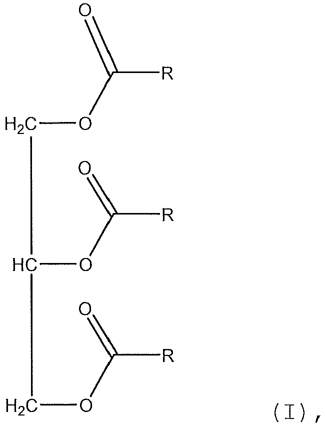 worin
   R gleich oder verschieden sein kann und einen gesättigten oder ungesättigten C₅-C₁₃-Kohlenwasserstoffrest bedeutet,
(2) Füllstoffe,
(3) Organopolysiloxanharze aus Einheiten der allgemeinen Formel

   R²ₑ(R³O)_{f}SiO_{(4-e-f)/2} (II),

   worin
   R² gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
   R³ gleich oder verschieden sein kann und ein Wasserstoffatom oder einen einwertigen, gegebenenfalls substituierten Kohlenwasserstoffrest mit 1 bis 4 C-Atomen bedeutet,
   e 0, 1, 2 oder 3 ist und
   f 0, 1, 2 oder 3 ist,
   mit der Maßgabe, dass die Summe e+f kleiner oder gleich 3 ist und in weniger als 50% aller Einheiten der Formel (II) im Organopolysiloxanharz die Summe e+f gleich 2 ist,
   gegebenenfalls
(4) wasserunlösliche organische Verbindungen, die verschieden von den Triacylglyceriden (1) sind,
   und gegebenenfalls
(5) alkalische oder saure Katalysatoren oder dessen Umsetzungsprodukte mit den Komponenten (1) bis (4).

Überraschenderweise wurde gefunden, dass Entschäumerformulierungen auf Basis von Triacylglyceriden mit Fettsäureresten, die weniger als 16 Kohlenstoffatome aufweisen, eine sehr gute Wirkung aufweisen. Dies gilt insbesondere auch für die beschriebenen Anwendungen, in denen kationische Tenside verwendet werden, oder für Anwendungen, in denen Spreitung wie im Spülzyklus des Waschprozesses eine bedeutende Rolle spielt.

Vorzugsweise enthalten die Entschäumerformulierungen (A) 100 Gew.-Teile Triacylglyceride (1) sowie
mindestens 1 Gew.-Teil, bevorzugt mindestens 1,5 Gew.-Teile, besonders bevorzugt mindestens 2 Gew.-Teile, und höchstens 25 Gew.-Teile, bevorzugt höchstens 20 Gew.-Teile, besonders bevorzugt höchstens 15 Gew.-Teile Füllstoffe (2), jeweils bezogen auf 100 Gew.-Teile (1),
mindestens 1 Gew.-Teil, bevorzugt mindestens 1,5 Gew.-Teile, besonders bevorzugt mindestens 2 Gew.-Teile, und höchstens 25 Gew.-Teile, bevorzugt höchstens 20 Gew.-Teile, besonders bevorzugt höchstens 15 Gew.-Teile Organopolysiloxanharze (3), jeweils bezogen auf 100 Gew.-Teile (1),
mindestens 0 Gew.-Teile und höchstens 25 Gew.-Teile, bevorzugt höchstens 17 Gew.-Teile, besonders bevorzugt höchstens 10 Gew.-Teile wasserunlösliche organische Verbindungen (4), jeweils bezogen auf 100 Gew.-Teile (1),
mindestens 0 Gew.-Teile, bevorzugt mindestens 0,05 Gew.-Teile, besonders bevorzugt mindestens 0,1 Gew.-Teile, und höchstens 2 Gew.-Teile, bevorzugt höchstens 1 Gew.-Teil, besonders bevorzugt höchstens 0,5 Gew.-Teile alkalische oder saure Katalysatoren (5) oder dessen Umsetzungsprodukte mit den Komponenten (1) bis (4), jeweils bezogen auf 100 Gew.-Teile (1).

Beispiele für Kohlenwasserstoffreste R sind Alkylreste oder Alkylenreste, wie der Pentyl-, Pentenyl-, Hexyl-, Hexenyl-, Heptyl-, Heptenyl-, Octyl-, Octenyl-, Nonyl-, Nonenyl- Decyl-, Decenyl-, Undecyl-, Undecenyl-, Dodecyl-, Dodecenyl-, Tridecylsowie der Tridecenylrest. Alkylreste sind bevorzugt. Besonders bevorzugte Beispiele für R sind der Pentyl-, Heptyl, Nonyl- sowie Undecylrest.

Vorzugsweise handelt es sich bei den in der Entschäumerformulierung (A) verwendeten Triacylglyceriden (1) um Triglyceride, die mittelkettige Fettsäuren enthalten. Zu den mittelkettigen Fettsäuren zählen die Capron- (C 6:0), Capryl-(C 8:0), Caprin- (C 10:0) und die Laurinsäure (C 12:0). In der Nomenklatur (C 6:0) bedeutet dabei "C 6" die Zahl der C-Atome und die "0" die Anzahl der Doppelbindungen.

Die in der Entschäumerformulierung (A) verwendeten Triacylglyceride (1) werden industriell durch Hydrolyse von Kokosfett und Palmkernöl, anschließender Fraktionierung der mittelkettigen Fettsäuren und schließlich erneuter Veresterung mit Glycerin gewonnen.

Bei den Triacylglyceriden (1) kann es sich um Triglyceride mit überwiegend nur einer Fettsäureart handeln, wie z.B. dem Caprylic Triglyceride (INCI-Nomenklatur) oder auch um solche mit einer Mischung aus Fettsäuren, wie z.B. dem Caprylic / Capric Triglyceride (INCI-Nomenklatur).

Triacylglyceride (1) können auch in geringem Umfang (als Verunreinigung), vorzugsweise 0 bis 10 Gew.-%, insbesondere 0 bis 5 Gew.-% weitere Fettsäurereste aufweisen, die längerkettig als 14 Kohlenstoffatome sind, z.B. der Stearyl-, Palmityl-, Linoly- oder der Linoleylrest.

Zu den Triacylglyceriden (1) gehören auch die sogenannten MCT-Öle (Medium chain triglycerides). Derartige Öle sind kommerziell erhältlich, wie z.B. als MCT-Öl Kokosbasiert (Fa. gustavhees) oder als CremerCOOR^{®} MCT C8, CremerCOOR^{®} MCT 60-40 oder CremerCOOR^{®} MCT 30-70 (Fa. Cremer Oleo Division).

Vorzugsweise bedeutet R² einen Kohlenwasserstoffrest mit 1 bis 30 Kohlenstoffatomen.

Beispiele für Kohlenwasserstoffreste R² sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest; Cycloalkylreste, wie der Cyclopentyl-, Cyclohexyl-, Cycloheptyl-, Methylcyclohexyl- und 4-Ethylcyclohexylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest und der α- und der β-Phenylethylrest. Die Kohlenwasserstoffreste R² können Ether- oder Polyethergruppen enthalten.

Bevorzugte Beispiele für Reste R² sind der Methyl-, Ethyl- und Phenylrest.

Beispiele für Reste R³ sind das Wasserstoffatom und Alkylreste, wie der Methyl-, Ethyl-, n-Propyl-, iso-Propyl- und n-Butylrest.

Bevorzugt ist der Rest R³ ein Wasserstoffatom oder ein Methyl- oder Ethylrest.

Vorzugsweise weisen die in den erfindungsgemäßen Entschäumerformulierungen eingesetzten Füllstoffe (2) eine BET-Oberfläche von 20 bis 1000 m²/g auf. Vorzugsweise weisen die Füllstoffe (2) eine Partikelgröße von weniger als 10 µm und eine Agglomeratgröße von weniger als 100 µm auf.

Beispiele für Füllstoffe (2) sind Siliciumdioxid (Kieselsäuren), Titandioxid, Aluminiumoxid, Metallseifen, Quarzmehl, PTFE-Pulver, Fettsäureamide, z. B. Ethylenbisstearamid, und fein verteilte hydrophobe Polyurethane.

Bevorzugt als Füllstoffe (2) sind Kieselsäuren, insbesondere solche mit einer BET-Oberfläche von 50 bis 800 m²/g. Diese Kieselsäuren können pyrogene oder gefällte Kieselsäuren sein. Es sind als Füllstoffe (2) sowohl vorbehandelte Kieselsäuren einsetzbar, also hydrophobe Kieselsäuren, als auch hydrophile Kieselsäuren. Beispiele für handelsübliche hydrophobe Kieselsäuren, die erfindungsgemäß eingesetzt werden können, sind HDK^{®} H2000, eine pyrogene mit Hexamethyldisilazanen behandelte Kieselsäure mit einer BET-Oberfläche von 140 m²/g (käuflich erhältlich bei der Wacker-Chemie GmbH, Deutschland) und eine gefällte mit Polydimethylsiloxan behandelte Kieselsäure mit einer BET-Oberfläche von 90 m²/g (käuflich erhältlich unter der Bezeichnung "Sipernat D10" bei der Evonik AG, Deutschland).

Bei der in den erfindungsgemäßen Entschäumerformulierungen eingesetzten Komponente (3) handelt es sich vorzugsweise um Siliconharze aus Einheiten der Formel (II), bei denen in weniger als 30%, bevorzugt in weniger als 5%, der Einheiten im Harz die Summe e+f gleich 2 ist.

Bevorzugt handelt es sich bei den Organopolysiloxanharzen (3) aus Einheiten der Formel (II) um MQ-Harze aus Einheiten der Formeln

SiO₂ (Q-Einheiten)

und

R²₃SiO_{1/2} (M-Einheiten)

, wobei R² die oben dafür angegebene Bedeutung hat.

Das molare Verhältnis von M- zu Q-Einheiten liegt dabei vorzugsweise im Bereich von 0,5 bis 2,0, bevorzugt im Bereich von 0,6 bis 1,0. Neben den M- und Q-Einheiten können die MQ-Harze gegebenenfalls noch geringe Mengen an R²SiO_{3/2} oder (R³O)SiO_{3/2} (T)-Einheiten oder R²₂SiO_{2/2} (D)-Einheiten, in Mengen von vorzugsweise 0,01 bis 20 Mol%, bevorzugt 0,01 bis 5 Mol%, bezogen auf die Summe aller Siloxaneinheiten, enthalten, wobei R³ die oben dafür angegebene Bedeutung hat. Diese MQ-Harze können außerdem bis zu 10 Gew.-% freie Si-gebundene Hydroxy- oder Alkoxygruppen, wie Methoxy- oder Ethoxygruppen, enthalten.

Vorzugsweise haben diese Organopolysiloxanharze (3) bei 25°C und 101,425 kPa eine Viskosität größer 1000 mPa·s oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200000 g/mol, insbesondere 1000 bis 20000 g/mol.

Bei den erfindungsgemäßen Entschäumerformulierungen können gegebenenfalls wasserunlösliche organische Verbindungen (4) eingesetzt werden.

Unter dem Begriff "wasserunlöslich" soll im Sinne der vorliegenden Erfindung eine Löslichkeit in Wasser bei 25°C und einem Druck von 101,425 kPa von maximal 3 Gewichtsprozenten verstanden werden.

Bei der gegebenenfalls eingesetzten Komponente (4) handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Kohlenwasserstoffen, Polyisobutylenen und Estern wie Fettsäureester mit Monoalkoholen.

Beispiele für Kohlenwasserstoffe sind Isoparaffine (beispielsweise erhältlich unter dem Handelsnamen Isopar^{®} E, Isopar^{®} G, Isopar^{®} H, Isopar^{®} J, Isopar^{®} L, Isopar^{®} M, Isopar^{®} N, Isopar^{®} P, Isopar^{®} V der Fa. ExxonMobil), dearomatisierte Kohlenwasserstoffe (beispielsweise erhältlich unter dem Handelsnamen Exxsol^{®} D40, Exxsol^{®} 60, Exxsol^{®} D95, Exxsol^{®} D100, Exxsol^{®} D130 der Fa. ExxonMobil) bzw. Weißöle. Besonders bevorzugt sind dearomatisierte Kohlenwasserstoffe. Beispiele für Polyisobutylene sind Produkte kommerziell erhältlich unter dem Handelsnamen Indopol^{®} (Fa. Ineos) oder Oppanol^{®} (Fa. BASF). Besonders bevorzugt sind solche Polyisobutylene mit einer kinematischen Viskosität von 20 bis 500 cSt gemessen bei einer Temperatur von 100 °C und einer Scherrate von 10 1/s Beispiele für Ester insbesondere Fettsäureester mit Monoalkoholen sind z.B. Methyllaurat, Isopropyllaurat, Octyllaurat, Octylstearat, Octyloleat, Dodecylpalmitat oder iso-Propylmyristat.

Beispiele für gegebenenfalls eingesetzte alkalische Katalysatoren (5) sind Alkali- und Erdalkalihydroxide, wie NaOH, KOH, CsOH, LiOH und Ca(OH)₂. Beispiele für saure Katalysatoren (5) sind Salzsäure, Schwefelsäure und Phosphornitrilchloride.

Bei den Umsetzungsprodukten von (5) mit den Komponenten (1) bis (4) handelt es sich beispielsweise um das Produkt aus der als Füllstoff (2) bevorzugten Kieselsäure mit Alkalihydroxiden, wie z.B. Kaliumsilicat oder Natriumsilicat.

Die Dosierung der Katalysatoren kann in typischen organischen Lösemitteln wie Alkoholen (wie z.B. Methanol, Ethanol, Isopropanol) oder Estern (wie z.B. Essigsäureethylester) erfolgen.

Bei den in den erfindungsgemäßen Entschäumerformulierungen (A) eingesetzten Komponenten (2) bis (5) kann es sich jeweils um eine Art einer solchen Komponente wie auch um ein Gemisch aus mindestens zwei Arten einer jeweiligen Komponente handeln.

Die erfindungsgemäßen Entschäumerformulierungen (A) haben eine Viskosität von vorzugsweise 50 bis 100000 mPa·s, besonders bevorzugt von 100 bis 10000 mPa·s, insbesondere von 200 bis 5000 mPa·s, jeweils bei 25°C und 101,425 kPa.

Das Herstellen der erfindungsgemäßen Entschäumerformulierung (A) kann nach bekannten Verfahren, wie durch Mischen aller Komponenten erfolgen, wie z. B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z. B. in hochdispersen Füllstoffen enthalten ist, zu verhindern. Im Anschluss kann bei Bedarf die in situ Hydrophobierung der Füllstoffe erfolgen.

Es ist auch möglich erst die Komponente (1) vorzulegen und ggf. zu erhitzen und dann sukzessive die Komponenten (2), (3), ggf. (4) und ggf. (5) zuzugeben.

In einer bevorzugten Ausführungsform wird Komponente (3) in gelöster Form als Lösung in Komponente (4) oder Teilen der Komponente (4) zugegeben.

Gegenstand der Erfindung sind weiterhin Emulsionen (E) von Entschäumerformulierungen enthaltend die erfindungsgemäßen Entschäumerformulierungen (A), Emulgatoren (B), gegebenenfalls Verdicker (C) und Wasser (W).

Zur Herstellung der erfindungsgemäßen Entschäumeremulsionen (E) können typische Emulgatoren (B) eingesetzt werden, die dem Fachmann beispielsweise zur Herstellung von Siliconemulsionen bekannt sind, wie z. B. nichtionische, anionische oder kationische Emulgatoren.

Bevorzugt werden Emulgatormischungen eingesetzt, wobei mindestens ein nichtionischer Emulgator enthalten sein sollte.

(Nicht einschränkende) Beispiele für verwendete nichtionische Emulgatoren (B-1) sind:
1. Alkylpolyglycolether, vorzugsweise solche mit 3 bis 30 EO-Einheiten und Alkylresten von 8 bis 20 C-Atomen.
2. Carbonsäurepolyglycolester, insbesondere Fettsäurepolyglycolester, vorzugsweise solche mit größer 6 EO-Einheiten und Carbonsäureresten von 8 bis 20 C-Atomen.
3. Ethoxylierte oder nicht ethoxylierte Sorbitanfettsäureester.
4. Ethoxyliertes Rizinusöl oder hydrierte Varianten.
5. Polyglycerincarbonsäureester.
6. Alkylpolyglykoside der allgemeinen Formel R*-O-Z_{O}, worin R* einen linearen oder verzweigten, gesättigten oder ungesättigten Alkylrest mit im Mittel 8-24 C-Atomen und Z_{O} einen Oligoglykosidrest mit im Mittel o = 1-10 Hexose- oder Pentoseeinheiten oder Gemischen davon bedeuten.
7. Alkylarylpolyglycolether, vorzugsweise solche mit 5 bis 30 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 30 EO- bzw. PO-Einheiten.
9. Polyvinylalkohol, der noch 5 bis 50%, vorzugsweise 8 bis 20% Vinylacetateinheiten aufweist, mit einem Polymerisationsgrad von 500 bis 3000.
10. Additionsprodukte von Alkylaminen mit Alkylresten von 8 bis 22 C-Atomen mit Ethylenoxid oder Propylenoxid.
11. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
12. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.

Bevorzugte nicht-ionische Emulgatoren (B-1) sind
1. Alkylpolyglycolether, vorzugsweise solche mit 3 bis 30 EO-Einheiten und Alkylresten von 8 bis 20 C-Atomen wie z.B. Ceteareth-20, Oleth-10, Oleth-20, Laureth-3, Laureth-4, Laureth-20, Laureth-23, Trideceth-5, Trideceth-6, Trideceth-8, Trideceth-10, Trideceth-12, Trideceth-16, Trideceth-20, Steareth-20 oder Steareth-21 (nach INCI-Bezeichnung).
2. Carbonsäurepolyglycolester, insbesondere Fettsäurepolyglycolester, vorzugsweise solche mit größer 6 EO-Einheiten und Carbonsäureresten von 8 bis 20 C-Atomen, wie z.B. PEG-20 Stearat, PEG-20 Laurat, PEG-7 Olivate, PEG-8 Oleate, PEG-8 Laurate HLB PEG-6 Stearate, PEG-20-Stearate oder PEG-100 Stearate (nach INCI-Bezeichnung).
3. Ethoxylierte oder nicht ethoxylierte Sorbitanfettsäureester, wie z.B. Sorbitan Laurate, Polysorbat 20, Polysorbat 60, Polysorbat 80 oder Polysorbat 85 (nach INCI-Bezeichnung).
4. Ethoxyliertes Rizinusöl oder hydrierte Varianten, wie z.B. (Bezeichnung nach INCI-Nomenklatur) PEG 200 Castor Oil oder PEG-60 hydrogenated Castor Oil.
5. Polyglycerincarbonsäureester, wie z.B. Polyglycerin-10 Oleat, Polyglycerin-10 Laurat oder Polyglycerin-10-Stearat.
6. Alkylpolyglykoside der allgemeinen Formel R*-O-Z_{O}, worin R* einen linearen oder verzweigten, gesättigten oder ungesättigten Alkylrest mit im Mittel 8-24 C-Atomen und Z_{O} einen Oligoglykosidrest mit im Mittel o = 1-10 Hexose- oder Pentoseeinheiten oder Gemischen davon bedeuten, wie z.B. Glucopon 215, Glucopon 225, Glucopon 600 (Bezeichnung nach Handelsnamen).

(Nicht einschränkende) Beispiele für anionische Emulgatoren(B-2) sind:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 30 Ethylenoxid (EO)-bzw. Propylenoxid(PO)einheiten.
2. Sulfonate, besonders Alkylsulfonate mit 8 bis 18 C-Atomen, Alkylarylsulfonate mit 8 bis 18 C-Atomen.
3. Alkali- und Ammoniumsalze von Carbonsäuren mit 8 bis 20 C-Atomen im Alkyl-, Aryl-, Alkaryl- oder Aralkylrest, insbesondere Alkali- und Ammoniumsalze von Fettsäuren vorzugsweise solche mit Carbonsäureresten von 8 bis 20 C-Atomen.

Bevorzugte anionische Emulgatoren (B-2) sind Alkali- und Ammoniumsalze von Carbonsäuren mit 8 bis 20 C-Atomen im Alkyl-, Aryl-, Alkaryl- oder Aralkylrest, besonders bevorzugte anionische Emulgatoren sind Alkali- und Ammoniumsalze von Fettsäuren, vorzugsweise solche mit Carbonsäureresten von 8 bis 20 C-Atomen, wie z.B. Natriumsalze, Kaliumsalze, Triethanolammoniumsalze der Laurinsäure, Myristinsäure, Palmitinsäure, Stearinsäure oder auch Ölsäure.

(Nicht einschränkende) Beispiele für kationische Emulgatoren (B-3) sind:
1. Salze von primären, sekundären und tertiären Fettaminen mit 8 bis 24 C-Atomen mit Essigsäure, Schwefelsäure, Salzsäure und Phosphorsäuren.
2. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
3. Quaternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate

Weiterhin können als Verdicker (C) bekannte Verbindungen, wie Polyacrylsäure, Polyacrylate, Celluloseether wie Carboxymethylcellulose und Hydroxyethylcellulose, Polyurethane, natürliche Verdicker, wie z. B. Xanthan Gum, sowie Konservierungsmittel und andere übliche und dem Fachmann bekannte Zusätze zugesetzt werden.

Die kontinuierliche Phase der erfindungsgemäßen Entschäumeremulsionen (E) ist bevorzugt Wasser. Es können jedoch auch erfindungsgemäße Entschäumeremulsionen (E) hergestellt werden, bei denen die kontinuierliche Phase durch die Komponenten (1) oder ggf. (4) gebildet wird.

Es kann sich dabei auch um multiple Emulsionen handeln.

Verfahren zur Herstellung von Entschäumeremulsionen (E) sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Die erfindungsgemäßen Entschäumeremulsionen (E) sind bevorzugt Öl-in-Wasser-Emulsionen, enthaltend 5 bis 50 Gew.-% der erfindungsgemäßen Entschäumerformulierung (A),
1 bis 20 Gew.-% Emulgatoren (B)
0 bis 5 Gew.-% Verdicker (C) und
25 bis 94 Gew.-% Wasser (W).

Die erfindungsgemäßen Zusammensetzungen können auch als frei fließende Pulver (P) formuliert werden. Diese sind z. B. bei der Anwendung in pulverförmigen Waschmitteln bevorzugt. Die Herstellung dieser Pulver ausgehend von erfindungsgemäßen Entschäumerformulierung (A) erfolgt nach dem Fachmann bekannten Verfahren, wie Sprühtrocknung oder Aufbaugranulation und mit dem Fachmann bekannten Zusätzen.

Gegenstand der Erfindung sind weiterhin Pulver (P) enthaltend die erfindungsgemäße Entschäumerformulierung (A) und Trägermaterialien (T).

Die erfindungsgemäßen Pulver (P) enthalten bevorzugt 2 bis 20 Gewichts-% der erfindungsgemäßen Entschäumerformulierung (A).

Als Träger (T) kommen z. B. Zeolithe, Natriumsulfat, Natriumbicarbonat, Natriumcarbonat, Cellulosederivate, Harnstoff sowie Harnstoff-Derivate und Zucker zum Einsatz.

Die erfindungsgemäßen Pulver (P) enthalten 80 bis 98 Gew.-% Trägermaterialien (T). Weitere Bestandteile der erfindungsgemäßen Pulver können z. B. Wachse sein oder organische Polymere, wie sie z. B. in EP-A 887097 und EP-A 1060778 beschrieben sind.

Die erfindungsgemäßen Entschäumerformulierungen (A) wie auch deren Emulsionen (E) oder Pulver (P) können überall eingesetzt werden, wo Entschäumerformulierungen auf der Basis von Organosiliciumverbindungen auch bisher eingesetzt wurden.

Dies gilt insbesondere zur Bekämpfung von Schaum in wässrigen Tensidsystemen, für die Anwendung in Wasch- und Reinigungsmitteln, zur Bekämpfung von Schaum in Abwasseranlagen, bei Textilfärbeverfahren, bei der Erdgaswäsche, in Polymerdispersionen, und zum Entschäumen von bei der Zellstoffherstellung anfallenden wässrigen Medien.

Ein weiterer Gegenstand der vorliegenden Erfindung ist daher ein Verfahren zum Entschäumen und/oder zur Verhinderung des Schäumens von Medien, indem die erfindungsgemäßen Entschäumerformulierungen (A) oder deren Emulsionen (E) oder Pulver (P) mit den Medien vermischt werden.

Vorzugsweise werden die erfindungsgemäßen Entschäumerformulierungen (A) zum Entschäumen und/oder zur Verhinderung des Schäumens kationischer Tensidsysteme oder in Anwendungen, in denen Spreitung eine bedeutende Rolle spielt, eingesetzt.

Die erfindungsgemäßen Entschäumerformulierungen können weiterhin in Wasch- und Reinigungsmitteln und Pflegemitteln, wie z. B. Weichspüler, eingesetzt werden, wobei die erfindungsgemäßen Entschäumerformulierungen (A) in Substanz oder in Form von Emulsionen (E) oder Pulvern (P) eingesetzt werden können.

Ein weiterer Gegenstand der vorliegenden Erfindung sind daher Wasch-, Reinigungs- und Waschpflegemittel, enthaltend die erfindungsgemäßen Entschäumerformulierungen (A) oder die erfindungsgemäßen Entschäumerformulierungen in Form von Emulsionen (E) oder in Form von Pulvern (P).

Der Zusatz der erfindungsgemäßen Entschäumerformulierung zu den schäumenden Medien kann direkt erfolgen, gelöst in geeigneten Lösungsmitteln, wie Toluol, Xylol, Methylethylketon oder tert.-Butanol, als Pulver oder als Emulsion. Die zur Erzielung der gewünschten Entschäumerwirkung notwendige Menge richtet sich z. B. nach der Art des Mediums, der Temperatur und der auftretenden Turbulenz.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Dynamische Viskositäten wurden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe (angegeben in mPa·s) stellt den arithmetischen Mittelwert von drei unabhängig durchgeführten Einzelmessungen dar. Die Messunsicherheit der dynamischen Viskosität beträgt 1,5%. Der Schergeschwindigkeitsgradient wurde in Abhängigkeit von der Viskosität gewählt und wird für jede Viskositätsangabe separat ausgewiesen.

Kinematische Viskositäten werden mittels eines Viskositäts-Messsystem ViscoSystem^{®} AVS 350 der Fa. Schott unter Verwendung von Ubbelohde Viskosimeterrohren mit Konstante (z.B. der Fa. Windaus oder Fa. VWR) nach DIN 51562-Teil 1 oder ISO/DIS 3105 (einschließlich deren Kalibrierung) bestimmt. Die Messungen erfolgen bei einer Temperatur von 25,0°C (+- 0,1°C). Die Viskositätsangabe (angegeben in mm²/s) stellt den arithmetischen Mittelwert von drei unabhängig durchgeführten Einzelmessungen dar: Die Messunsicherheit der kinematischen Viskosität beträgt 1,05%. Abhängig vom Messbereich werden unterschiedliche Viskosimeterrohre mit entsprechenden Richtkonstanten verwendet:

| Messbereich | Kapillar-Nr. | Richtkonstante |
|---|---|---|
| 0,5 - 3 mm²/s | 0c | 0,003 K |
| 0,8 - 5 mm²/s | 0a | 0,005 K |
| 1,2 - 10 mm²/s | I | 0,01 K |
| 3 - 30 mm²/s | Ic | 0,03 K |
| 10 - 100 mm²/s | II | 0,10 K |
| 30 - 300 mm²/s | IIc | 0,30 K |
| 100 - 1000 mm²/s | III | 1 K |
| 300 - 3000 mm²/s | IIIc | 3 K |
| 1000 - 10000 mm²/s | IV | 10 K |

Angabe des Messbereichs, der entsprechenden Kapillar-Nr. sowie der Konstante nach VWR-Laborkatalog, 2011-2013, S. 645.8.

### Beispiel 1:

### Herstellung der Entschäumerformulierung (A1), (VA2) und (VA3), Entschäumeremulsionen (E1) und (VE2) sowie Entschäumerpulver (P1):

### a) Entschäumerformulierung A1:

Zur Herstellung der Entschäumerformulierung **A1** wurden 89 Gew.-Teile eines MCT-Öls (käuflich erhältlich bei der Fa. Gustavheess unter dem Namen MCT Öl Typ V Ph.Eur. 10.0 mit einem Gehalt an gesättigten Fettsäuren mit 8 oder 10 Kohlenstoffatomen von mindestens 95,0 Gew.-% und max. 1,0 Gew.-% an ≥ C16-Fettsäuren), 6 Gew.-Teile einer gefällten Kieselsäure (käuflich erhältlich bei der Fa. Evonik unter dem Namen Sipernat^{®} D 10), 2,5 Gew.-Teile eines Kohlenwasserstoffgemisches mit einem Siedebereich von 235-270°C (käuflich erhältlich unter der Bezeichnung Exxsol D 100 S bei Staub & Co Nürnberg, Deutschland) sowie 2,5 Gew.-Teile eines bei Raumtemperatur festen Siliconharzes bestehend aus folgenden Einheiten (nach ²⁹Si-NMR und IR-Analyse): 40 mol-% CH₃SiO_{1/2}-, 50 mol-% SiO_{4/2}-, 8 mol-% C₂H₅OSiO_{3/2}- und 2 mol-% HOSiO_{3/2}-, mit einer gewichtsmittleren Molmasse von 7900 g/mol (bezogen auf Polystyrolstandard), mit einem Dissolver 10 min bei 800 Upm homogenisiert. Es resultiert eine niederviskose Entschäumerformulierung **A1** mit einer Viskosität von 305 mPa·s (bei 25°C und bei einer Scherrate von 10 1/s).

### b) nicht-erfindungsgemäße Entschäumerformulierung VA2:

Zur Herstellung der nicht-erfindungsgemäßen Entschäumerformulierung **VA2** wurden 85 Gew.-Teile Sojaöl (käuflich erhältlich bei der Fa. gustavheess unter dem Namen Sojaöl hydriert Ph. Eur. mit einem Gehalt von 9-13 Gew.-% Palmitinsäure, 17-30 Gew.-% Ölsäure und Isomeren, 48-58 Gew.-% Linolsäure, 5-11 Gew.-% Linolensäure und maximal 0,1 Gew.-% < C14-Fettsäuren), 5 Gew.-Teile der gefällten Kieselsäure aus Beispiel 1a), 5 Gew.-Teile des Kohlenwasserstoffgemisch aus Beispiel 1a) sowie 5 Gew.-Teile des festen Siliconharzes aus Beispiel 1a) mit einem Dissolver 10 min bei 800 Upm homogenisiert. Es resultiert eine niederviskose Entschäumerformulierung **VA2** mit einer Viskosität von 840 mPa·s (bei 25°C und bei einer Scherrate von 10 1/s).

### c) nicht-erfindungsgemäße Entschäumerformulierung VA3:

Die Herstellung der nicht-erfindungsgemäßen Entschäumerformulierung **VA3** erfolgt analog zur Herstellung der Entschäumerformulierung **VA2.** Als Hauptkomponente wurde Palmöl (käuflich erhältlich bei der Fa. Gustavheess unter dem Namen Palmöl hydriert Ph. Eur. mit einem Gehalt von ca. 35 Gew.-% Palmitinsäure, ca. 46 Gew.-% Ölsäure, ca. 13,5 Gew.-% Linolsäure, 3,5 Gew.-% Stearinsäure und maximal 2,5 Gew.-% < C14-Fettsäuren) statt des Sojaöls verwendet. Es resultiert eine Entschäumerformulierung **VA3** mit einer Viskosität von 300000 mPa·s (bei 25°C und bei einer Scherrate von 0,5 1/s).

### d) Entschäumeremulsion E1:

Entschäumeremulsion **E1** wird hergestellt, indem man 10 Gew.-Teile einer Emulgatoren-Mischung enthaltend einen ethoxylierten Isotridecylalkohol (HLB-Wert von 11,2), einen ethoxylierten Stearylalkohl (HLB 9,7), Pentaerytrithdistearat und Ammoniumlaurylsulfat mit 20 Gew.-Teilen der Entschäumerformulierung **A1** sowie 70 Gew.-Teilen Wasser mittels eines Ultraturrax mischt. Schließlich gibt man 0,3 Gew.-Teile einer Biozid-Mischung bestehend aus Benzylisothiazolinon und Chlormethylisothiazolinon hinzu. Es resultiert eine milchig-weiße Emulsion mit einer Viskosität von 220 mPa·s (bei 25°C und bei einer Scherrate von 10 1/s).

### e) nicht-erfindungsgemäße Entschäumerformulierung VE2:

Die Herstellung der nicht-erfindungsgemäßen Entschäumeremulsion **VE2** erfolgt analog zur Herstellung der Entschäumerformulierung **E1,** wobei statt der Entschäumerformulierung **A1** die Entschäumerformulierung **VA2** verwendet wird. Es resultiert eine milchig-weiße Emulsion mit einer Viskosität von 50 mPa·s (bei 25 °C und bei einer Scherrate von 10 1/s).

### f) Entschäumerpulver P1:

In einem Becherglas werden 56,3 g Natriumbicarbonat, 56,3 g Natriumsulfat sowie 15,0 g einer nativen Cellulose, wie z.B. Arbocel UFC M8 (käuflich erhältlich bei der Fa. Rettenmaier & Söhne), vorgelegt und unter intensivem Mischen mit einem Flügelrührer miteinander gemischt. 22,5 g der Entschäumerformulierung **A1** werden unter intensivem Rühren langsam zugegeben. Es wurde ein weißes, rieselfähiges Pulver erhalten.

### Beispiel 2:

### Prüfungen der Entschäumerwirksamkeit in der Waschmaschine

Zu 130 g eines Waschpulvers ECE-2 der Firma WFK wurde eine bestimmte Menge (siehe Tabelle 1) an Entschäumerformulierung **A1** gegeben. Das Waschpulver wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm gestartet. Das Programm läuft bei einer Temperatur von 40°C und einer Wasserhärte von 3°GH ab. Die Schaumhöhe wird über einen Zeitraum von 55 Minuten aufgezeichnet. Aus den über den Gesamtzeitraum ermittelten Schaumnoten (0% kein Schaum messbar bis 100% Überschäumen) wird die durchschnittliche Schaumnote bestimmt. Je niedriger diese ist, desto wirksamer ist die Entschäumerformulierung über den gesamten Zeitraum.

**Tabelle 1: Entschäumerwirkung der Entschäumerformulierung A1 in einer Waschmaschine:**

| Entschäumerformulierung | Dosierung pro 100 g Waschpulver | durchschnittliche Schaumnote |
|---|---|---|
| **A1** | 0,5 g | 7% |

Die Entschäumerformulierung **A1** weist über den gesamten Waschzeitraum eine exzellente Antischaumwirkung auf.

### Beispiel 3:

### Prüfung der Wirksamkeit als Entschäumer bei Tensid-Rückständen im Spülzyklus

5,0 L Leitungswasser (16°GH) werden in eine 8 L Plastikschüssel gegeben. 20 g des Waschpulvers ECE-2 der Firma WFK werden hinzugegeben und mit der Hand dispergiert. Ein Frotteetuch (100% Baumwolle, 45 x 45 cm, ca. 100 g, ca. 490 g/m², zweimal in der Waschmaschine vorgewaschen) wird in die Waschlauge gelegt, mehrmals eingetaucht, ausgedrückt und einweichen gelassen. Das Frotteetuch wird rausgenommen und auf ein Gesamtgewicht von 350 g ausgewrungen.

Eine Spüllösung (in einer weiteren 8 L Plastikschüssel) bestehend aus 5 L Leitungswasser (16°GH) und 15 g einer Kationtensid-Lösung wird vorbereitet. Bei der Kationtensid-Lösung handelt es sich um eine 11,1 Gew.-%ige wässrige Lösung von Stepantex^{®} VK 90 (9:1 Mischung von Methyl bis[ethyl(tallowate)]-2-hydroxyethyl ammonium methyl sulfat mit Isopropanol; käuflich erhältlich bei der Fa. Stepan). Abhängig vom Experiment (s. Tabelle 2) werden die angegebenen Mengen an Entschäumerformulierung bzw. -emulsion hinzugegeben.

Das nasse Frotteetuch wird in die Spüllösung gelegt, wieder herausgenommen und ausgewrungen, um Schaum zu erzeugen. Diese Prozedur wird dreimal wiederholt. Schließlich wird nach 30 Sekunden ein Foto zur Evaluierung des resultierenden Schaums auf der Oberfläche der Spüllösung gemacht.

**Tabelle 2: Kationtensid-Formulierungen:**

| Wässrige Kationtensid-Lösung | Menge an Kationtensid (*) | Menge an Entschäumerformulierung bzw. -emulsion |
|---|---|---|
| **K1** | 11,1 Gew.-% | - |
| **K2** | 11,1 Gew.-% | 0,025 Gew.-% **A1** |
| **K3** | 11,1 Gew.-% | 0,125 Gew.-% **E1** |
| **K4** | 11,1 Gew.-% | 0,125 Gew.-% **VE2** |

| | | |
|---|---|---|
| (*) Methyl bis[ethyl(tallowate)]-2-hydroxyethyl ammonium methyl sulfat (käuflich erhältlich bei der Fa. Stepan unter dem Namen Stepantex^{®} VK 90, 9:1 Mischung mit Isopropanol) | | |

**Tabelle 3: Evaluierung der Entschäumerwirksamkeit:**

| Kationtensid-Lösung | Entschäumerwirksamkeit |
|---|---|
| **K1** | - |
| **K2** | +++ |
| **K3** | ++ |
| **K4** | - |

| | |
|---|---|
| - keine Schaumreduktion (< 30% Schaumreduktion) + geringfügige Schaumreduktion (30-50% Schaumreduktion) ++ gute Schaumreduktion (50 - 75% Schaumreduktion) +++ sehr gute Schaumreduktion (>75% Schaumreduktion) | |

Kationtensidformulierung **K2** enthaltend Entschäumerformulierung **A1** zeigt gegenüber dem Blindwert **K1** (ohne Entschäumerformulierung) eine ausgezeichnete Entschäumerwirksamkeit. Dies gilt auch für die Kationtensidformulierung **K3** enthaltend Emulsion **E1** (wiederum enthaltend **A1).** Dagegen zeigt die (nicht-erfindungsgemäße) Entschäumeremulsion **VE2** (basierend auf Triacylglyceriden mit >C14-Fettsäureresten als Hauptkomponente) keine Entschäumerwirkung.

### Beispiel 4:

### Prüfung der Entschäumerwirksamkeit in einer wässrigen Kationtensid-Lösung

20 ml einer Kationtensid-Lösung werden in ein 50 mL BRAND^{®} PP Zentrifugenglas gegeben. Als Kationtensid wird Methyl bis[ethyl(tallowate)]-2-hydroxyethyl ammonium methyl sulfat (käuflich erhältlich bei der Fa. Stepan unter dem Namen Stepantex^{®} VK 90, 9:1 Mischung mit Isopropanol) verwendet. Die Menge an Kationtensid wird entsprechend der Angaben in Tabelle 4 variiert. Die Entschäumerformulierung wird in die Kationtensid-Lösung gegeben und die Lösung wird gerührt, um die Entschäumerformulierung gleichmäßig zu verteilen.

Mit Hilfe eines Ultra Turrax Dispergierers (ULTRA-TURRAX T 25 der Firma IKA-Labortechnik, ausgestattet mit einem S 25 N-10 G Dispergierwerkzeug) wird die Kationtensid-Lösung bei 20 000 Upm für 1 min geschert. Der Dispergierer wird entfernt und die resultierende Schaumhöhe wird nach 60 Sekunden bestimmt.

**Tabelle 4: Entschäumerwirkung der Entschäumerformulierungen A1 und VA3 in einer Kationtensid-Lösung:**

| Konzentration des Kationtensids in der Kationtensid-Lösung | Schaumhöhe nach 60 Sek. Entschäumerformulierung **A1** | Schaumhöhe nach 60 Sek. Entschäumerformulierung **VA3** |
|---|---|---|
| 4 Gew.-% | 3 ml | 15 ml |
| 5 Gew.-% | 1 ml | 12 ml |
| 6 Gew.-% | 0 ml | 11 ml |
| 7 Gew.-% | 1 ml | 9 ml |
| 8 Gew.-% | 0 ml | 8 ml |
| 9 Gew.-% | 3 ml | 9 ml |
| 10 Gew.-% | 4 ml | 7 ml |

| | | |
|---|---|---|
| (Dosierung 0,1 Gew.-% der Entschäumerformulierung **A1** bzw. **VA3** in der Kationtensid-Lösung) | | |

Die Entschäumerformulierung **A1** zeigt über den gesamten Konzentrationsbereich der Kationtensid-Lösung eine gegenüber Entschäumerformulierung **VA3** bessere Entschäumerwirkung auf.

### Beispiel 5:

### Prüfung der Entschäumerwirksamkeit des erfindungsgemäßen Entschäumerpulvers P1 während des Spülvorgangs in der Geschirrspülmaschine:

Zu 20 g eines Entschäumer-freien Geschirrspülpulvers (enthaltend Natriumcitrat-Dihydrat, Natriumcarbonat, Natriumsulfat, Natriumbicarbonat, Natriumpercarbonat, Tetranatrium etidronat und Ceteareth-25) wurde eine bestimmte Menge (siehe Tabelle 5) des Entschäumerpulvers **P1** gegeben. Das Waschpulver wurde sodann in das Spülfach einer Geschirrspülmaschine (Typ Bauknecht GSF 50204) gegeben. Anschließend wird das Waschprogramm ohne Geschirr gestartet. Das Programm läuft bei einer Temperatur von 40°C und einer Wasserhärte von 16°GH ab. Die Schaumhöhe wird über den Sprühdruck ermittelt. Der Sprühdruck gibt eine Aussage zur Schaumentwicklung während des Spülvorgangs. Wird ausschließlich Wasser gepumpt, weist der Sprühdruck ca. 300 mbar auf. Fällt der Sprühdruck, so wird ein Wasser/Schaum-Gemisch gepumpt. Je tiefer der Sprühdruck fällt, umso mehr Schaum befindet sich im Geschirrspüler. Der minimal auftretende Sprühdruck wird aufgezeichnet.

**Tabelle 5: Entschäumerwirkung der Entschäumerformulierungen P1 im Geschirrspüler:**

| Eingesetzte Menge an Entschäumerpulver | Minimal auftretender Sprühdruck (Mittelwert über 3 Messungen | Anmerkung |
|---|---|---|
| 2 Gew.-% **P1** | 248 mbar | kaum Schaumbildung |
| Kein Entschäumer | 36 mbar | Sehr starke Schaumbildung |

Das Entschäumerpulver **P1** (enthaltend Entschäumerformulierung **A1**) zeigt eine sehr gute Wirkung in der Kontrolle des Schaums während des Spülvorgangs in der Geschirrspülmaschine.

## Patentansprüche

1. Entschäumerformulierungen (A) enthaltend
(1) 100 Gew.-Teile Triacylglyceride der Formel 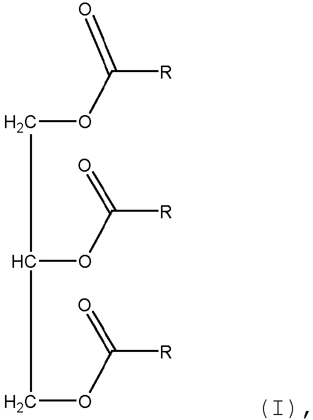 worin
R gleich oder verschieden sein kann und einen gesättigten oder ungesättigten C₅-C₁₃-Kohlenwasserstoffrest bedeutet,
(2) mindestens 1 Gew.-Teil und höchstens 25 Gew.-Teile Füllstoffe, bezogen auf 100 Gew.-Teile (1),
(3) mindestens 1 Gew.-Teil und höchstens 25 Gew.-Teile Organopolysiloxanharze, bezogen auf 100 Gew.-Teile (1), aus Einheiten der allgemeinen Formel
R²ₑ(R³O)_{f}SiO_{(4-e-f)/2} (II),
worin
R² gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
R³ gleich oder verschieden sein kann und ein Wasserstoffatom oder einen einwertigen, gegebenenfalls substituierten Kohlenwasserstoffrest mit 1 bis 4 C-Atomen bedeutet,
e 0, 1, 2 oder 3 ist und
f 0, 1, 2 oder 3 ist,
mit der Maßgabe, dass die Summe e+f kleiner oder gleich 3 ist und in weniger als 50% aller Einheiten der Formel (II) im Organopolysiloxanharz die Summe e+f gleich 2 ist,
gegebenenfalls
(4) mindestens 0 Gew.-Teile und höchstens 25 Gew.-Teile wasserunlösliche organische Verbindungen, bezogen auf 100 Gew.-Teile (1), die verschieden von den Triacylglyceriden (1) sind,
und gegebenenfalls
(5) mindestens 0 Gew.-Teile und höchstens 2 Gew.-Teile alkalische oder saure Katalysatoren oder dessen Umsetzungsprodukte mit den Komponenten (1) bis (4), bezogen auf 100 Gew.-Teile (1).

2. Entschäumerformulierungen (A) nach Anspruch 1, **dadurch gekennzeichnet, dass** es Triglyceride sind, die mittelkettige Fettsäuren ausgewählt aus Capron- (C 6:0), Capryl- (C 8:0), Caprin- (C 10:0) und Laurinsäure (C 12:0) enthalten, wobei in der Nomenklatur (C 6:0), (C 8:0), (C 10:0) und (C 12:0) "C 6", "C 8", "C 10" und "C 12" jeweils die Zahl der C-Atome und die "0" die Anzahl der Doppelbindungen bedeutet.

3. Entschäumerformulierungen nach Anspruch 1 oder 2, **dadurch gekennzeichnet, dass** als Füllstoffe (2) Kieselsäuren eingesetzt werden.

4. Entschäumerformulierungen (A) nach einem der Ansprüche 1 bis 3, **dadurch gekennzeichnet, dass** als Organopolysiloxanharze (3) MQ-Harze aus Einheiten der Formeln
SiO₂ (Q-Einheiten)
und
R²₃SiO_{1/2} (M-Einheiten),
eingesetzt werden,
wobei das molare Verhältnis von M- zu Q-Einheiten dabei im Bereich von 0,5 bis 2,0 liegt, die MQ-Harze neben den M- und Q-Einheiten noch geringe Mengen an R²SiO_{3/2} oder (R³O)SiO_{3/2} (T)-Einheiten oder R²₂SiO_{2/2} (D)-Einheiten, in Mengen von 0,01 bis 20 Mol%, bezogen auf die Summe aller Siloxaneinheiten, enthalten können und die MQ-Harze bis zu 10 Gew.-% freie Si-gebundene Hydroxy- oder Alkoxygruppen, wie Methoxy- oder Ethoxygruppen, enthalten können, wobei R² und R³ die in Anspruch 1 dafür angegebene Bedeutung haben.

5. Entschäumerformulierungen (A) nach einem der Ansprüche 1 bis 4, **dadurch gekennzeichnet, dass** als wasserunlösliche organische Verbindungen (4), die verschieden von den Triglyceriden (1) sind, solche mit einem Siedepunkt größer als 100°C bei 900 bis 1100 hPa, vorzugsweise solche ausgewählt aus Kohlenwasserstoffen, Polyisobutylenen und Fettsäureester mit Monoalkoholen, eingesetzt werden.

6. Emulsionen (E) von Entschäumerformulierungen enthaltend Entschäumerformulierungen (A) nach einem der Ansprüche 1 bis 5,
Emulgatoren (B),
gegebenenfalls Verdicker (C) und
Wasser (W).

7. Pulver (P) enthaltend
Entschäumerformulierungen (A) nach einem der Ansprüche 1 bis 5 und
Trägermaterialien (T).

8. Waschmittel, Reinigungsmittel oder Waschpflegemittel enthaltend
Entschäumerformulierungen (A) nach einem der Ansprüche 1 bis 5 oder deren Emulsionen (E) nach Anspruch 6 oder deren Pulver (P) nach Anspruch 7.

9. Verfahren zum Entschäumen und/oder zur Verhinderung des Schäumens von Medien, indem die Entschäumerformulierungen (A) nach einem der Ansprüche 1 bis 5 oder deren Emulsionen (E) nach Anspruch 6 oder deren Pulver (P) nach Anspruch 7 mit den Medien vermischt werden.

10. Verwendung der Entschäumerformulierungen (A) nach Anspruch 1 bis 5 oder deren Emulsionen (E) nach Anspruch 6 oder deren Pulver (P) nach Anspruch 7 zum Entschäumen und/oder zur Verhinderung des Schäumens in kationischen Tensidsystemen oder im Spülzyklus des Waschprozesses.

## Claims

1. Defoamer formulations (A) comprising
(1) 100 parts by weight of triacylglycerides of the formula 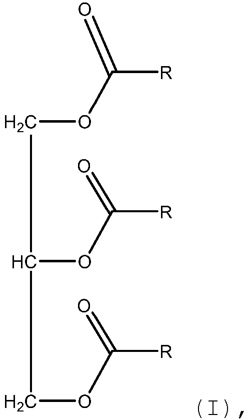 where
R may be the same or different and is a saturated or unsaturated C₅-C₁₃ hydrocarbon radical,
(2) at least 1 part by weight and at most 25 parts by weight of fillers, based on 100 parts by weight of (1),
(3) at least 1 part by weight and at most 25 parts by weight of organopolysiloxane resins, based on 100 parts by weight of (1), composed of units of the general formula
R²ₑ(R³O)_{f}SiO_{(4-e-f)/2} (II),
where
R² may be the same or different and is a hydrogen atom or a monovalent, optionally substituted, SiC-bonded hydrocarbon radical having 1 to 30 carbon atoms,
R³ may be the same or different and is a hydrogen atom or a monovalent, optionally substituted, hydrocarbon radical having 1 to 4 carbon atoms,
e is 0, 1, 2 or 3 and
f is 0, 1, 2 or 3,
with the proviso that the sum of e+f is less than or equal to 3 and in less than 50% of all units of the formula (II) in the organopolysiloxane resin the sum of e+f is equal to 2,
optionally
(4) at least 0 parts by weight and at most 25 parts by weight of water-insoluble organic compounds, based on 100 parts by weight of (1), which differ from the triacylglycerides (1),
and optionally
(5) at least 0 parts by weight and at most 2 parts by weight of alkaline or acidic catalysts or reaction products thereof with the components (1) to (4), based on 100 parts by weight of (1).

2. Defoamer formulations (A) according to Claim 1, **characterized in that** said formulations are triglycerides comprising medium-chain fatty acids selected from caproic acid (C 6:0), caprylic acid (C 8:0), capric acid (C 10:0) and lauric acid (C 12:0), where in the nomenclature (C 6:0), (C 8:0), (C 10:0) and (C 12:0), "C 6", "C 8", "C 10" and "C 12" is in each case the number of carbon atoms and the "0" signifies the number of double bonds.

3. Defoamer formulations according to Claim 1 or 2, **characterized in that** silicas are used as fillers (2).

4. Defoamer formulations (A) according to any of Claims 1 to 3, **characterized in that** the organopolysiloxane resins (3) used are MQ resins composed of units of the formulae
SiO₂ (Q units)
and
R²₃SiO_{1/2} (M units),
where the molar ratio of M to Q units is in the range from 0.5 to 2.0, the MQ resins may also comprise, in addition to the M and Q units, small amounts of R²SiO_{3/2} or (R³O)SiO_{3/2} (T) units or R²₂SiO_{2/2} (D) units, in amounts from 0.01 to 20 mol%, based on the sum of all siloxane units, and the MQ resins may comprise up to 10% by weight of free Si-bonded hydroxyl or alkoxy groups, such as methoxy or ethoxy groups,
where R² and R³ are as defined in Claim 1.

5. Defoamer formulations (A) according to any of Claims 1 to 4, **characterized in that** the water-insoluble organic compounds (4) used, which differ from the triglycerides (1), are those having a boiling point greater than 100°C at 900 to 1100 hPa, preferably those selected from hydrocarbons, polyisobutylenes and fatty acid esters with monoalcohols.

6. Emulsions (E) of defoamer formulations comprising defoamer formulations (A) according to any of Claims 1 to 5,
emulsifiers (B),
optionally thickeners (C) and
water (W).

7. Powder (P) comprising
defoamer formulations (A) according to any of Claims 1 to 5 and
support materials (T).

8. Detergent, cleaning composition or laundry care composition comprising
defoamer formulations (A) according to any of Claims 1 to 5 or emulsions (E) thereof according to Claim 6 or powders (P) thereof according to Claim 7.

9. Process for defoaming and/or for preventing foaming of media by mixing the defoamer formulations (A) according to any of Claims 1 to 5 or emulsions (E) thereof according to Claim 6 or powders (P) thereof according to Claim 7 with the media.

10. Use of the defoamer formulations (A) according to Claim 1 to 5 or emulsions (E) thereof according to Claim 6 or powders (P) thereof according to Claim 7 for defoaming and/or for preventing foaming in cationic surfactant systems or in the rinsing cycle of the washing process.

## Revendications

1. Formulations d'antimousse (a) contenant
(1) 100 parties en poids de triacylglycérides de formule 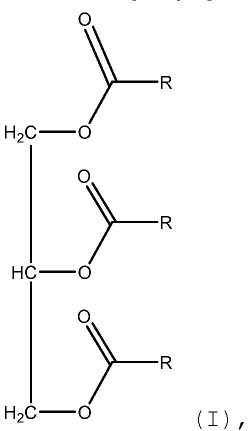 dans laquelle
R peut être identique ou différent et signifie un radical hydrocarboné saturé ou insaturé en C₅-C₁₃,
(2) au moins 1 partie en poids et au plus 25 parties en poids de charges, par rapport à 100 parties en poids de (1),
(3) au moins 1 partie en poids et au plus 25 parties en poids de résines d'organopolysiloxane, par rapport à 100 parties en poids de (1), constituées par des motifs de formule générale
R²ₑ(R³O)_{f}SiO_{(4-e-f)/2} (II),
dans laquelle
R² peut être identique ou différent et signifie un atome d'hydrogène ou un radical hydrocarboné monovalent, le cas échéant substitué, lié par SiC, comprenant 1 à 30 atomes de carbone,
R³ peut être identique ou différent et représente un atome d'hydrogène ou un radical hydrocarboné monovalent, le cas échéant substitué, comprenant 1 à 4 atomes de carbone,
e vaut 0, 1, 2 ou 3 et
f vaut 0, 1, 2 ou 3,
à condition que la somme e+f soit inférieure ou égale à 3 et que, dans moins de 50% de tous les motifs de formule (II) dans la résine d'organopolysiloxane, la somme e+f soit égale à 2,
le cas échéant
(4) au moins 0 partie en poids et au plus 25 parties en poids de composés organiques insolubles dans l'eau, par rapport à 100 parties en poids de (1), qui sont différents des triacylglycérides (1),
et le cas échéant
(5) au moins 0 partie en poids et au plus 2 parties en poids de catalyseurs alcalins ou acides ou de leurs produits de transformation avec les composants (1) à (4), par rapport à 100 parties en poids de (1).

2. Formulations d'antimousse (a) selon la revendication 1, **caractérisées en ce qu'**il s'agit de triglycérides qui contiennent des acides gras à chaîne moyenne choisis parmi les acides caproïque (C 6:0), caprylique (C 8:0), caprique (C 10:0) et laurique (C 12:0), où dans la nomenclature (C 6:0), (C 8:0), (C 10:0) et (C 12:0), "C 6", "C 8", "C 10" et "C 12" signifient à chaque fois le nombre d'atomes de carbone et "0" signifie le nombre de doubles liaisons.

3. Formulations d'antimousse selon la revendication 1 ou 2, **caractérisées en ce que** des silices sont utilisées comme charges (2).

4. Formulations d'antimousse (A) selon l'une des revendications 1 à 3, **caractérisées en ce qu'**on utilise, comme résines d'organopolysiloxane (3), des résines MQ constituées par des motifs des formules
SiO₂ (motifs Q)
et
R²₃SiO_{1/2} (motifs M),
,
le rapport molaire des motifs M aux motifs Q étant situé dans la plage de 0,5 à 2,0, les résines MQ pouvant encore contenir, outre les motifs M et les motifs Q, de faibles quantités de motifs R²SiO_{3/2} ou (R³O)SiO_{3/2} (motifs T) ou R²₂SiO_{2/2} (motifs D), en des quantités de 0,01 à 20% en mole, par rapport à la somme de tous les motifs siloxane, et les résines MQ pouvant contenir jusqu'à 10% en poids de groupes hydroxy ou alcoxy libres liés par Si, tels que des groupes méthoxy ou éthoxy,
R² et R³ présentant la signification indiquée dans la revendication 1 pour ces radicaux.

5. Formulations d'antimousse (A) selon l'une des revendications 1 à 4, **caractérisées en ce qu'**on utilise, comme composés organiques insolubles dans l'eau (4), qui sont différents des triglycérides (1), ceux présentant un point d'ébullition supérieur à 100°C à 900 jusqu'à 1100 hPa, de préférence ceux choisis parmi les hydrocarbures, les polyisobutylènes et les esters d'acides gras avec des monoalcools.

6. Émulsions (E) de formulations d'antimousse contenant
des formulations d'antimousse (A) selon l'une des revendications 1 à 5,
des émulsifiants (B),
le cas échéant des épaississants (C) et
de l'eau (W).

7. Poudres (P) contenant
des formulations d'antimousse (A) selon l'une des revendications 1 à 5 et
des matériaux support (T).

8. Agents de lavage, agents de nettoyage ou agents d'entretien du linge contenant
des formulations d'antimousse (a) selon l'une des revendications 1 à 5 ou leurs émulsions (E) selon la revendication 6 ou leurs poudres (P) selon la revendication **7.**

9. Procédé destiné à démousser et/ou à empêcher le moussage d'agents, dans lequel les formulations d'antimousse (A) selon l'une des revendications 1 à 5 ou leurs émulsions (E) selon la revendication 6 ou leurs poudres (P) selon la revendication 7 sont mélangées avec les agents.

10. Utilisation des formulations d'antimousse (A) selon les revendications 1 à 5 ou de leurs émulsions (E) selon la revendication 6 ou de leurs poudres (P) selon la revendication 7 afin de démousser et/ou d'empêcher le moussage dans des systèmes tensioactifs cationiques ou dans le cycle de rinçage du procédé de lavage.
